# FASCICULE DE BREVET EUROPEEN

(11) **EP 4 598 272 B1**
(45) Date de publication et mention de la délivrance du brevet: **18.11.2026**
(21) Numéro de dépôt: 25154131.4
(22) Date de dépôt: 27.01.2025
(51) Int. Cl.: H05B 6/70, B01D 53/00, B01J 19/12, H05B 6/80

(54) **RÉACTEUR À MICRO-ONDES POUR L ABATTEMENT DE GAZ TOXIQUES OU POLLUANTS PAR OXYDATION THERMIQUE**
MIKROWELLENREAKTOR ZUR VERRINGERUNG VON GIFTIGEN ODER SCHÄDLICHEN GASEN DURCH THERMISCHE OXIDATION
MICROWAVE REACTOR FOR ABATEMENT OF TOXIC OR POLLUTING GASES BY THERMAL OXIDATION

(30) Priorité: 30.01.2024 FR 2400913
(43) Date de publication de la demande: 06.08.2025
(73) Titulaire: Sairem Societe Pour L'application Industrielle De La Recherche En Electronique Et Micro Ondes, 69150 Decines Charpieu (FR)
(72) Inventeur: LATRASSE, Louis, 69380 Châtillon (FR); RENAUT, Nicolas, 69800 SAINT-PRIEST (FR); LEVY, Dovan, 69300 CALUIRE-ET-CUIRE (FR)
(74) Mandataire: Germain Maureau

(56) Documents cités:
- WO-A1-2015/111821
- WO-A1-2016/058251
- WO-A1-2020/104757
- WO-A2-2012/087948
- KR-A- 20110 133 773
- KR-A- 20180 107 584

## Description

### [Domaine technique]

L'invention se rapporte à un réacteur à micro-ondes pour l'abattement par oxydation thermique de gaz toxiques ou polluants contenus dans des gaz.

L'invention se rapporte également à une installation micro-ondes comprenant le réacteur micro-ondes, ainsi qu'à un procédé de traitement micro-ondes mis en œuvre par l'installation micro-ondes pour l'abattement par oxydation thermique de gaz toxiques ou polluants contenus dans des gaz.

L'invention trouve une application favorite, et non limitative, dans le milieu industriel pour traiter, plus précisément incinérer, les composés organiques volatils résultant de la mise en œuvre de procédés industriels, et permettre ainsi aux acteurs de l'Industrie d'être en conformité avec les réglementations relatives à la Santé et l'Environnement. Elle est également extensible au traitement de gaz toxiques ou polluants, tels que des gaz à effet de serre.

### [Etat de la technique]

Il est connu que, dans le cadre de leur usage et/ou de leur activité, de nombreuses applications et infrastructures industrielles rejetant dans l'atmosphères des gaz toxiques ou polluants néfastes à la fois pour l'environnement (en étant en partie responsables de la pollution, du réchauffement climatique...) et/ou la santé des personnes (en étant par exemple mutagènes ou cancérigènes).

Il est également connu que les composés organiques volatils (abrégés COV en français) sont des composés chimiques contenant au moins un atome de carbone associé à d'autres atomes comme l'hydrogène, l'oxygène, l'azote, le soufre, ou encore le phosphore (à quelques exceptions près, tels les oxydes de carbone). Les émissions de composés organiques volatils proviennent de nombreux phénomènes biologiques mais aussi de réactions de combustion ou d'évaporation de composés organiques comme les solvants présents dans les peintures, les colles ou les cosmétiques.

Les émissions de composés organiques volatils produits par de nombreux secteurs industriels font l'objet de réglementations très strictes au niveau national et international, lesquelles réglementations évoluant par ailleurs dans le temps.

Aussi, le traitement des composés organiques volatils constitue un impératif environnemental et financier pour de nombreux sites industriels.

Une des solutions les plus connues pour le traitement des composés organiques volatils est l'oxydation thermique, aussi appelée incinération, qui consiste à détruire les composés organiques volatils au moyen d'un catalyseur monté en température. L'oxydation thermique est mise en œuvre au moyen d'incinérateurs. Lorsqu'ils sont incinérés (ou oxydés thermiquement), les composés organiques volatils se transforment alors au moins en partie en dioxyde de carbone (CO₂) et eau (H₂O). Cependant, un inconvénient des incinérateurs est qu'ils requièrent, pour la combustion des composés organiques volatils, d'être alimentés en gaz naturel, ce qui a pour conséquence de générer des quantités importantes de dioxyde de carbone qui est un gaz connu pour contribuer négativement au réchauffement climatique. Ainsi, les incinérateurs peuvent potentiellement ne plus répondre à des réglementations environnementales comme celles limitant les émissions de dioxyde de carbone. Par ailleurs, les incinérateurs peuvent engendrer des coûts d'investissement et d'exploitation importants en fonction de la taille de leur infrastructure.

Pour traiter les composés organiques volatils par oxydation thermique de manière plus flexible et moins encombrante, tout en étant plus économe en énergie, il est connu de la littérature, par exemple dans les documents CN113209918 A et KR20180107584 A, de chauffer le catalyseur en l'exposant à des micro-ondes. Le catalyseur est pour cela placé dans une enceinte d'un réacteur micro-ondes à l'intérieur de laquelle il est exposé aux rayonnements, et dans laquelle circule le gaz qui contient des composés organiques volatils à traiter.

KR 2011 0133773 A (KIM KYO YUN [KR]) 14 décembre 2011 (2011-12-14) décrit un réacteur à micro-ondes pour un abattement par oxydation thermique de gaz toxiques.

### [Résumé de l'invention]

L'invention propose un réacteur micro-ondes qui permet, avantageusement, de chauffer de manière homogène/uniforme le catalyseur contenu dans l'enceinte du réacteur, ici un élément en céramique macroporeuse, en vue d'abattre le plus efficacement possible par oxydation thermique des gaz toxiques ou polluants contenus dans des gaz.

En particulier, un but de l'invention est d'atteindre les objectifs fixés par les normes environnementales actuellement en vigueur pour le traitement et l'élimination des composés organiques volatils, tout en se passant pour cela de l'utilisation de gaz combustibles.

Ainsi, l'invention propose un réacteur à micro-ondes selon la revendication 1.

Il est ainsi bien clair, au sens de l'invention, que lorsque le gaz atteint le ou chaque élément en céramique macroporeuse, le gaz traverse ce ou chaque élément en céramique macroporeuse, sans le contourner. Aussi, il n'est nul besoin de recourir à un quelconque tube diélectrique, transparent aux micro-ondes pour confiner l'écoulement du gaz.

En d'autres termes, le réacteur à micro-ondes ne comprend pas un tube diélectrique, réalisé dans une matière transparente aux micro-ondes, disposé à l'intérieur de l'enceinte du réacteur à micro-ondes et recevant intérieurement l'au moins élément en céramique macroporeuse.

Autrement dit, le réacteur à micro-ondes, en vue de traiter par oxydation thermique les gaz toxiques ou polluants qui sont injectés et se propagent selon un axe d'écoulement à l'intérieur de celui-ci, comprend une enceinte à l'intérieur de laquelle est contenu au moins un élément en céramique macroporeuse de type filtre à particules. Au cours de leur écoulement dans l'enceinte, les gaz toxiques ou polluants, tels que par exemple les composés organiques volatils, traversent l'au moins un élément en céramique macroporeuse.

L'au moins un élément en céramique macroporeuse possède des propriétés diélectriques lui permettant d'augmenter rapidement sa température par absorption de rayonnements électromagnétiques. Lorsqu'il s'élève en température, l'au moins un élément en céramique macroporeuse chauffe les gaz le traversant, et lorsque cette température, dite température de chauffage, atteint une plage de température dite plage de température d'oxydation thermique, il oxyde thermiquement les gaz toxiques ou polluants. Ces températures atteintes par l'au moins un élément en céramique macroporeuse pour oxyder thermiquement les gaz toxiques ou polluants sont avantageusement compétitives avec les températures de fonctionnement des incinérateurs au gaz actuels qui sont utilisés pour ce type de traitement, et qui sont de l'ordre de 900°C.

Lorsqu'ils sont complètements traités (c'est-à-dire oxydés thermiquement), les gaz épurés de tout gaz toxiques ou polluants peuvent être libérés dans l'atmosphère sans que cela impacte l'environnement.

Pour les composés organiques volatils, le réacteur à micro-ondes-propose avantageusement un taux de conversion (aussi appelé rendement de traitement thermique) d'environ 99%. Ce taux de conversion concerne une pluralité de composés organiques volatils, par exemple et non exhaustivement : le xylène, l'isopropanol (IPA), le méthyléthylcétone (MEK, butanone), le méthyl ter-butyl éther (MTBE).

Par ailleurs, dans le cas où le traitement par oxydation thermique d'un composés organiques volatils génèrerait des émissions de gaz nocifs , ces émissions restent inférieures aux valeurs limites d'émission (VLE) précisées dans l'article 27.7 de l'Arrêté en France du 2 février 1998 relatif aux prélèvements et à la consommation d'eau ainsi qu'aux émissions de toute nature des installations classées pour la protection de l'environnement soumises à autorisation, qui est applicable aux rejets atmosphériques en sortie d'une installation de traitement par oxydation thermique, à savoir :
- une valeur limite d'émission pour les composés organiques volatils totaux égale à 20 mg éq.C/Nm³ (milligramme équivalent Carbone par normaux mètres cubes),
- une valeur limite d'émission pour le monoxyde de carbone (CO) égale à 100 mg éq.CO/Nm³ (milligramme équivalent CO par normaux mètres cubes),
- une valeur limite d'émission pour les oxydes d'azote (NOx) égale à 100 mg eq.NO₂/Nm³ (milligramme équivalent NO₂ par normaux mètres cubes,
- une valeur limite d'émission pour le méthane (CH₄) égale à 50 mg éq.CH₄/Nm³ (milligramme équivalent CH₄ par normaux mètres cubes).

Avantageusement, le réacteur à micro-ondes de l'invention peut traiter des débits d'injection de gaz contenant des composés organiques volatils de l'ordre de 30 m³/h (soit environ 500 L/min) pour des concentrations minimales en composés organiques volatils totaux de l'ordre de 15 000 mg éq. C/Nm³ dans une atmosphère contenant à minima 6 % de dioxygène (vol %), cela sans formation de coproduits nocifs ou du moins formation de ces coproduits à des concentrations inférieures à leur VLE. Le temps nécessaire à la traversée du gaz et à une conversion à 99% des gaz toxiques ou polluants qu'il contient pour de tels débits d'injection du gaz et de telles concentrations est de l'ordre d'une à deux secondes.

Dans le but de le chauffer rapidement, l'au moins un élément en céramique macroporeuse est positionné au moins en face de l'au moins une fenêtre d'entrée par laquelle pénètrent les micro-ondes à l'intérieur de l'enceinte.

L'application d'un champ électrique perpendiculairement à l'axe d'écoulement, avec le grand côté de l'au moins un guide d'onde d'entrée qui est parallèle à la propagation des gaz, fait qu'avantageusement, ledit champ électrique ne verra pas de frontière ni de transition brutale des pertes diélectriques.

L'au moins un élément en céramique macroporeuse possède également une géométrie en nid d'abeille afin d'avoir une surface d'échange très importante avec les gaz le traversant, pour pouvoir les chauffer et les oxyder thermiquement plus rapidement.

Géométriquement, l'au moins un élément en céramique macroporeuse présente une hauteur d'élément s'étendant dans l'enceinte le long de l'axe d'écoulement, ainsi qu'un diamètre d'élément. Plus le diamètre d'élément est grand, plus l'oxydation thermique des gaz toxiques ou polluants est accélérée.

Dans un mode de réalisation de l'invention, l'au moins un élément en céramique macroporeuse est en carbure de silicium qui est avantageux pour monter rapidement en température lorsqu'exposé aux micro-ondes.

La plage de température d'oxydation thermique dépend de la nature des gaz toxiques ou polluants à traiter, et des débits à laquelle ils sont injectés dans le réacteur à micro-ondes.

Pour un élément en céramique macroporeuse en carbure de silicium, la plage de température d'oxydation thermique pour oxyder thermiquement des composés organiques volatils est comprise entre 800°C et 1000°C.

Dans d'autres modes de réalisation, l'au moins un élément en céramique macroporeuse est choisi parmi : la zircone, la chromite de lanthane, des oxydes métalliques.

Dans un mode de réalisation de l'invention, l'enceinte est de section circulaire avec un diamètre correspondant à la dimension latérale. L'au moins un élément en céramique macroporeuse se présente alors sous la forme d'un cylindre de structure macroporeuse (puisque l'intérieur du cylindre présente sur toute sa hauteur une structure macroporeuse).

Selon une autre caractéristique, l'axe d'écoulement est un axe vertical de sorte que l'enceinte s'étend verticalement, et l'axe de propagation est un axe horizontal de sorte que le guide d'ondes d'entrée s'étend horizontalement.

Avantageusement, l'enceinte repose en hauteur sur une embase de support, telle qu'une embase de support munie de plusieurs pieds de support, de sorte que l'enceinte est surélevée du sol grâce à l'embase de support.

Selon une caractéristique de l'invention, l'au moins un élément en céramique macroporeuse présente deux extrémités opposées le long de l'axe d'écoulement et, lorsque le diamètre d'élément est strictement inférieur au diamètre interne de l'enceinte, l'au moins un élément en céramique macroporeuse est maintenu dans l'enceinte au moyen d'éléments de maintien fixés autour des deux extrémités respectives.

Selon différentes variantes de réalisation de l'invention, les éléments de maintien correspondent à des couronnes ou des entretoises. Ces éléments de maintien participent également au confinement du gaz pour qu'il s'écoule au travers du ou de chaque élément en céramique macroporeuse.

Selon une caractéristique de l'invention, l'au moins un élément en céramique macroporeuse et l'au moins une fenêtre d'entrée présentent respectivement une hauteur d'élément et une hauteur de fenêtre mesurées le long de l'axe d'écoulement, ladite hauteur d'élément étant supérieure ou égale à la hauteur de fenêtre

Avantageusement, lorsque l'au moins un élément en céramique macroporeuse présente, dans le sens de l'axe d'écoulement, la même hauteur que l'au moins une fenêtre d'entrée, il est chauffé rapidement, mais également uniformément, augmentant le taux de conversion des gaz toxiques ou polluants.

Selon une possibilité, l'au moins une fenêtre d'entrée est délimitée par deux bords longitudinaux parallèles aux grands côtés de l'au moins un guide d'ondes d'entrée et par deux bords latéraux parallèles aux petits côtés de l'au moins un guide d'ondes d'entrée, où les bords longitudinaux présentent une longueur inférieure ou égale à la grande dimension et les bords latéraux présentent une longueur inférieure ou égale à la petite dimension.

Ainsi, l'au moins une fenêtre d'entrée est de section rectangulaire équivalente ou plus petite que la section rectangulaire du guide d'ondes d'entrée.

Avantageusement, les bords longitudinaux de la fenêtre d'entrée, au moyen de laquelle l'au moins un guide d'ondes d'entrée est fixé à l'enceinte, présentent une longueur inférieure à la grande dimension et les bords latéraux de la fenêtre d'entrée présentent une longueur égale à la petite dimension, de sorte que la fenêtre d'entrée forme un iris d'entrée. Un tel iris d'entrée optimise le chauffage de l'au moins un élément en céramique macroporeuse, en améliorant la pénétration des micro-ondes à l'intérieur de celui-ci. La taille de l'iris peut être adaptée en vue que l'au moins élément en céramique macroporeuse : s'élève à une température de chauffage comprise dans la plage de température d'oxydation thermique et qui est idéale pour oxyder thermiquement un gaz toxique ou polluant d'une nature donnée ; et puisse être maintenu à cette dite température.

Selon une caractéristique de l'invention, le réacteur micro-ondes comprend au moins un guide d'ondes de sortie fixé transversalement sur l'enceinte de manière diamétralement opposée à l'au moins un guide d'ondes d'entrée, où :
- ledit au moins un guide d'ondes de sortie s'étend selon l'axe de propagation et a une section rectangulaire avec deux grands côtés définissant une grande dimension et deux petits côtés définissant une petite dimension inférieure à la grande dimension, les grands côtés de l'au moins un guide d'ondes de sortie étant parallèles à l'axe d'écoulement, tandis que les petits côtés de l'au moins un guide d'ondes de sortie sont orthogonaux à l'axe d'écoulement, la grande dimension de l'au moins un guide d'ondes de sortie étant équivalente à la grande dimension de l'au moins un guide d'ondes d'entrée et la petite dimension de l'au moins un guide d'ondes de sortie étant équivalente à la petite dimension de l'au moins un guide d'ondes d'entrée ;
- ladite enceinte présente au moins une fenêtre de sortie diamétralement opposée à l'au moins fenêtre d'entrée et entourée par l'au moins un guide d'ondes de sortie pour une propagation de micro-ondes à travers l'au moins une fenêtre de sortie.

Selon une caractéristique de l'invention, le réacteur micro-ondes comprend en outre au moins un dispositif de court-circuit fixé sur l'au moins un guide d'ondes de sortie, ledit au moins un dispositif de court-circuit étant soit du type piston de court-circuit ajustable le long de l'axe de propagation, soit du type court-circuit fixe.

Avantageusement, l'au moins un dispositif de court-circuit sert d'adaptateur d'impédance pour optimiser/maximiser la transmission du rayonnement micro-ondes à l'au moins un élément en céramique macroporeuse, de sorte à ce qu'il soit chauffé de manière homogène.

Selon une caractéristique de l'invention, la longueur d'enceinte est entre 1,5 fois et 6 fois supérieure à la grande dimension de l'au moins un guide d'ondes d'entrée.

Avantageusement, ce rapport de dimensions permet d'assurer une absorption progressive des micro-ondes par l'au moins un élément en céramique macroporeuse, et d'éviter l'apparition d'un phénomène de résonance à l'intérieur de l'enceinte : si cette enceinte présentait une longueur d'enceinte inférieure ou égale à la grande dimension du guide d'ondes d'entrée, l'absorption des micro-ondes ne serait pas progressive le long de l'axe d'écoulement, conduisant à un chauffage hétérogène de l'au moins un élément en céramique macroporeuse.

Selon une possibilité, l'au moins un guide d'ondes d'entrée est fixé transversalement sur l'enceinte :
- soit à une distance de la première extrémité comprise entre 0,4 et 0,6 fois la longueur d'enceinte (donc substantiellement au milieu de l'enceinte) ;
- soit à une distance de la première extrémité comprise entre 0,1 et 0,4 fois la longueur d'enceinte (donc substantiellement plus proche d'une extrémité de l'enceinte).

Selon une caractéristique de l'invention, l'enceinte comporte des couvercles prévus sur la première extrémité et la seconde extrémité, lesdits couvercles étant munis de manchons de raccordement pour raccorder la première extrémité et la seconde extrémité de l'enceinte respectivement à une canalisation d'un système d'injection du gaz et à une canalisation d'un système d'échappement du gaz pour une mise en écoulement du gaz.

Dans un mode de réalisation de l'invention, lequel les manchons de raccordement présentent chacun un diamètre interne de manchon tel que le diamètre d'élément est supérieur ou égal audit diamètre interne de manchon.

Selon l'invention, le réacteur à micro-ondes est tel que :
- l'au moins un guide d'ondes d'entrée comprend un premier guide d'onde d'entrée et un second guide d'onde d'entrée qui sont décalés l'un par rapport à l'autre selon une direction parallèle à l'axe d'écoulement,
- l'au moins une fenêtre d'entrée comprend une première fenêtre d'entrée et une seconde fenêtre d'entrée qui sont également décalées l'une par rapport à l'autre selon une direction parallèle à l'axe d'écoulement, la première fenêtre d'entrée étant entourée par le premier guide d'onde d'entrée et la seconde fenêtre d'entrée étant entourée par le second guide d'onde d'entrée ;
et dans lequel l'au moins un élément en céramique macroporeuse est positionné au moins en face de la première fenêtre d'entrée et de la seconde fenêtre d'entrée.

En d'autres termes, dans l'invention, le réacteur à micro-ondes comporte deux guides d'ondes d'entrée, appelés respectivement premier et second guide d'ondes d'entrée, qui sont disposés en parallèle et qui présentent des caractéristiques structurelles et géométriques similaires.

Chaque guide d'ondes d'entrée est couplé à sa propre fenêtre d'entrée pour introduire des micro-ondes dans l'enceinte. Les deux fenêtres d'entrée sont déportées l'une de l'autre le long de l'axe d'écoulement.

Avantageusement, le premier guide d'ondes d'entrée et le second guide d'ondes d'entrée présentent en particulier la même grande dimension et la même petite dimension. Il est également avantageux que le second guide d'ondes d'entrée soit réalisé dans le même matériau que le premier guide d'ondes d'entrée, de manière que les cinématiques de propagation des micro-ondes dans les deux guides d'ondes d'entrée soient les mêmes.

Selon un mode de réalisation de l'invention, l'au moins un élément en céramique macroporeuse s'étend au moins depuis la première fenêtre d'entrée jusqu'à la seconde fenêtre d'entrée.

Autrement dit, dans un mode de réalisation, l'au moins un élément en céramique macroporeuse :
- possède une hauteur d'élément au moins égale aux hauteurs des deux fenêtres d'entrée additionnées à la distance les séparant toutes deux dans le sens de l'axe d'écoulement, et
- est disposé dans l'enceinte face aux deux fenêtres d'entrée.

Avantageusement, dans cette configuration, l'au moins un élément en céramique macroporeuse est chauffé plus rapidement que dans le cas, où pour une même hauteur d'élément, l'enceinte ne présenterait qu'une seule fenêtre d'entrée. Etant donné que les deux guides d'ondes d'entrée et les deux fenêtres d'entrée sont structurellement identiques, le positionnement tel qu'indiqué de l'au moins un élément en céramique macroporeuse dans l'enceinte permet aussi de le chauffer uniformément.

Plus la hauteur d'élément de l'au moins élément en céramique macroporeuse est grande, plus le temps de contact du gaz avec l'au moins un élément en céramique macroporeuse est important. Si l'au moins un élément en céramique macroporeuse est de plus chauffé uniformément, alors l'oxydation thermique est plus efficace et le taux de conversion des gaz toxiques ou polluants est plus élevé.

Selon un mode de réalisation de l'invention, l'au moins un élément en céramique macroporeuse comprend un premier élément en céramique macroporeuse positionné au moins en face de la première fenêtre d'entrée, et un second élément en céramique macroporeuse distinct du premier élément en céramique macroporeuse et positionné au moins en face de la seconde fenêtre d'entrée.

Dans cette configuration, l'enceinte comprend deux éléments en céramique macroporeuse tels que chacun d'eux est au moins positionné face à une deux fenêtres d'entrée. Etant donné que les deux guides d'ondes d'entrée et les deux fenêtres d'entrée sont structurellement identiques, les deux éléments en céramique macroporeuse, dans le cas où ils possèdent la même géométrie et sont identiquement disposés au moins face à leur fenêtre d'entrée respective, sont avantageusement pareillement chauffés. Autrement dit, le temps de chauffe nécessaire pour atteindre une température de chauffage comprise dans la plage de température d'oxydation thermique est le même pour les deux éléments en céramique macroporeuse.

L'oxydation thermique des gaz toxiques ou polluants consiste donc en une traversée du gaz dans les deux éléments en céramique macroporeuse. Une partie, voire éventuellement la totalité, des gaz toxiques ou polluants peut être convertie lors du contact du gaz avec le premier des deux éléments en céramique macroporeuse qu'il rencontre dans le sens d'écoulement. Le rôle du second élément en céramique macroporeuse est donc d'oxyder thermiquement les gaz toxiques ou polluants qui n'auraient pas été convertis suite à la traversée du gaz dans le premier élément en céramique macroporeuse.

Selon l'invention, le premier guide d'onde d'entrée et le second guide d'onde d'entrée sont reliés à un même guide d'ondes amont prévu pour l'introduction de micro-ondes à l'intérieur de chacun desdits premier guide d'onde d'entrée et second guide d'onde d'entrée, ledit guide d'ondes amont présentant au moins une portion rectiligne présentant une section rectangulaire avec deux grands côtés définissant une grande dimension et deux petits côtés définissant une petite dimension inférieure à la grande dimension, les grands côtés dudit guide d'ondes amont étant parallèles à l'axe d'écoulement, tandis que les petits côtés dudit guide d'ondes amont sont orthogonaux à l'axe d'écoulement.

Il est ainsi possible, au moyen du guide d'ondes amont, de réaliser une propagation de micro-ondes simultanément dans le premier guide d'ondes d'entrée et dans le second guide d'ondes d'entrée, parallèlement à l'axe de propagation. Le guide d'ondes amont a donc pour fonction de transmettre les micro-ondes se propageant en son sein à chacun deux guides d'ondes d'entrée.

Il est également avantageux que la grande dimension et la petite dimension du guide d'ondes amont soient respectivement équivalentes à la grande dimension et à la petite dimension du premier et du second guides d'ondes d'entrée. De la sorte, la propagation des micro-ondes dans le guide d'ondes amont est identique à celle dans le premier et le second guides d'ondes d'entrée.

Selon une caractéristique, l'au moins un guide d'ondes de sortie comprend un premier guide d'ondes de sortie et un second guide d'ondes de sortie qui sont respectivement fixés transversalement sur l'enceinte de manière diamétralement opposée au premier guide d'ondes d'entrée et au second guide d'ondes d'entrée, où :
- ledit second guide d'ondes de sortie s'étend parallèlement à l'axe de propagation et a une section rectangulaire avec deux grands côtés définissant une grande dimension et deux petits côtés définissant une petite dimension inférieure à la grande dimension, les grands côtés du second guide d'ondes de sortie étant parallèles à l'axe d'écoulement, tandis que les petits côtés du second guide d'ondes de sortie sont orthogonaux à l'axe d'écoulement, la grande dimension du second guide d'ondes de sortie étant équivalente à la grande dimension du second guide d'ondes d'entrée et la petite dimension du second guide d'ondes de sortie étant équivalente à la petite dimension du second guide d'ondes d'entrée ;
- ladite enceinte présente une seconde fenêtre de sortie diamétralement opposée à la seconde fenêtre d'entrée et entourée par le second guide d'ondes de sortie pour une propagation de micro-ondes à travers la seconde fenêtre de sortie.

Autrement dit, le réacteur à micro-ondes comporte un second guide d'ondes de sortie associé au second guide d'ondes d'entrée, ce second guide d'ondes de sortie présentant des caractéristiques structurelles et géométriques similaires et la même fonction que le premier guide d'ondes de sortie associé au premier guide d'ondes d'entrée.

En particulier, ce second guide d'ondes de sortie peut présenter la même grande dimension et la même petite dimension que le premier guide d'ondes de sortie et le premier guide d'ondes d'entrée.

Ce second guide d'ondes de sortie peut également, de la même manière que le premier guide d'ondes de sortie, être muni d'un dispositif de court-circuit, par exemple du type piston de court-circuit ajustable parallèlement à l'axe de propagation ou du type court-circuit fixe.

Selon une caractéristique de l'invention, l'au moins un élément en céramique macroporeuse est monobloc ou est formé d'un empilement d'au moins deux blocs en céramique macroporeuse dans le sens de l'axe d'écoulement.

Dans un mode de réalisation de l'invention, l'au moins un élément en céramique macroporeuse comprend au moins deux ou plus éléments en céramique macroporeuse empilés et plaqués les uns sur les autres dans le sens de l'axe d'écoulement, et tels qu'une addition de leurs hauteurs d'élément respectives est égale à au moins 90 % de la longueur d'enceinte.

Dans un mode de réalisation particulier de l'invention, l'addition des hauteurs d'élément des éléments en céramique macroporeuse empilés les uns sur les autres est égale à la longueur d'enceinte.

L'invention se rapporte également à une installation micro-ondes un abattement par oxydation thermique de gaz toxiques ou polluants contenus dans un gaz en écoulement, ladite installation micro-ondes comprenant au moins :
- un réacteur à micro-ondes tel que décrit ci-avant,
- au moins un générateur à micro-ondes, raccordé à l'au moins un guide d'ondes d'entrée du réacteur à micro-ondes

Autrement dit, dans l'installation, les micro-ondes permettant de chauffer l'au moins un élément en céramique macroporeuse, pour qu'ils oxydent thermiquement les gaz toxique ou polluant contenus dans les gaz s'écoulant dans l'enceinte du réacteur à micro-ondes, proviennent d'au moins un générateur micro-ondes raccordé à l'au moins un guide d'onde d'entrée.

Plus la puissance micro-ondes délivrée par l'au moins un générateur micro-ondes est élevée, plus l'au moins un élément en céramique macroporeuse monte en température rapidement.

Avantageusement, l'installation permet de traiter par oxydation thermique des gaz toxique ou polluant sur une plage de fréquence des micro-ondes allant de 300 MHz à 30 GHz. A noter que les dimensions du réacteur à micro-ondes varient proportionnément avec l'inverse de la fréquence considérée pour le traitement.

Précédemment, il a été indiqué que le réacteur à micro-ondes permet de traiter avantageusement, lorsque le diamètre interne de l'enceinte est égal à 150 mm, des débits d'injection de gaz contenant des composés organiques volatils de l'ordre de 30 m³/h (soit environ 500 L/min) pour des concentrations minimales en composés organiques volatils dans l'air de l'ordre de 15 000 mg eq.C/Nm³. Pour traiter de tels débits d'injection de gaz et de telles concentrations, l'au moins un générateur à micro-ondes doit fournir avantageusement une puissance micro-ondes maximale comprise entre 13 kW et 15 kW.

Selon une caractéristique de l'invention, l'installation micro-ondes comprend une unité de contrôle raccordée à l'au moins un générateur à micro-ondes et configurée pour contrôler une puissance micro-ondes en sortie de l'au moins un générateur à micro-ondes et ainsi pour réguler une température de l'au moins un élément en céramique macroporeuse dans une plage de température d'oxydation thermique.

Selon une caractéristique de l'invention, l'installation micro-ondes comprend un dispositif de mesure de température conformé pour mesurer la température de l'au moins un élément en céramique macroporeuse, l'unité de contrôle étant au moins en communication avec ledit dispositif de mesure de température et configurée pour contrôler la puissance micro-ondes en fonction de la mesure de la température de l'au moins un élément en céramique macroporeuse.

Selon un mode de réalisation de l'invention, le dispositif de mesure de température est un capteur infra-rouge par exemple une caméra ou un pyromètre, placé sur une bride de lucarne disposée sur l'enceinte du réacteur à micro-ondes.

Avantageusement, le capteur infra-rouge est un dispositif de mesure de température compatible avec une installation à micro-ondes utilisée pour l'oxydation thermique de gaz toxiques ou polluants compris dans des gaz. En effet, l'insertion de capteurs de type thermocouple à l'intérieur de l'au moins un élément en céramique macroporeuse est impossible en raison des interactions entre ce type de capteur métallique et le rayonnement micro-ondes, lesquelles peuvent fausser les mesures, générer des arcs électriques. L'insertion de capteurs à fibre optique n'est également pas possible en raison de la dégradation thermique de la gaine polymère de ce type de capteur aux températures de chauffage auxquelles doivent s'élever l'au moins un élément en céramique macroporeuse (au-delà de 800°C).

Selon une caractéristique de l'invention, l'installation micro-ondes comprend :
- un système d'injection pour une injection du gaz avec un débit d'injection donné à l'intérieur de l'enceinte du réacteur à micro-ondes, ledit système d'injection comprenant une canalisation d'injection raccordée à la première extrémité de l'enceinte pour injecter le gaz au niveau de ladite première extrémité ;
- un système d'échappement pour un échappement du gaz hors de l'enceinte du réacteur à micro-ondes, ledit système d'échappement comprenant une canalisation d'échappement raccordée à la seconde extrémité de l'enceinte pour évacuer le gaz au niveau de ladite seconde extrémité après traitement au travers de l'au moins un élément en céramique macroporeuse.

Le débit d'injection de gaz injecté dans l'enceinte du réacteur à micro-ondes influe sur l'efficacité du traitement par oxydation thermique des gaz toxiques ou polluants, et donc sur le taux de conversion. En effet, plus le débit d'injection est élevé, plus le gaz se propage rapidement dans l'enceinte, et plus le temps de contact entre les gaz toxiques ou polluants et l'au moins un élément en céramique macroporeuse est réduit.

Autrement dit, afin de convertir complètement les gaz toxiques ou polluants, et afin que le traitement ne soit pas partiel et qu'il ne donne donc pas lieu à la génération de produits nocifs, la température de chauffage de l'au moins élément en céramique macroporeuse doit être adaptée dans la plage de température d'oxydation thermique en fonction du débit d'injection du gaz. Augmenter le débit d'injection du gaz implique d'augmenter la température de chauffage de l'au moins un élément en céramique macroporeuse, ce qui signifie que l'au moins un générateur à micro-ondes doit alors fournir plus de puissance micro-ondes. A l'inverse, en réduisant le débit d'injection du gaz, le temps de contact entre le gaz et l'au moins un élément en céramique macroporeuse est plus long. Les réactions d'oxydation peuvent alors être complétées pour des températures de chauffage plus basses de la plage de température d'oxydation thermique, et donc des puissances micro-ondes délivrées par l'au moins un générateur à micro-ondes plus faibles.

Selon une caractéristique de l'invention, l'installation comprend un débitmètre pour mesurer le débit d'injection du gaz, et dans laquelle l'unité de contrôle est au moins en communication avec le débitmètre et est configurée pour contrôler la puissance micro-ondes en fonction du débit d'injection du gaz.

L'invention se rapporte enfin à un procédé de traitement micro-ondes pour un abattement par oxydation thermique de gaz toxiques ou polluants contenus dans un gaz en écoulement, ledit procédé de traitement micro-ondes étant mis en œuvre par une installation micro-ondes telle que décrite ci-avant et comprenant au moins les étapes suivantes :
- une étape préliminaire de chauffage durant laquelle l'au moins un générateur à micro-ondes génère des micro-ondes jusqu'à ce que l'au moins un élément en céramique macroporeuse atteigne une température de chauffage comprise dans une plage de température d'oxydation thermique ;
- une étape d'injection, se déroulant après l'étape préliminaire de chauffage, durant laquelle est injecté en continu dans l'enceinte le gaz avec un débit d'injection donné.

Selon une caractéristique de l'invention, le procédé de traitement micro-ondes compred une étape de contrôle en puissance durant laquelle est contrôlée une puissance micro-ondes en sortie de l'au moins un générateur à micro-ondes pour réguler une température de l'au moins un élément en céramique macroporeuse dans la plage de température d'oxydation thermique.

Selon une caractéristique de l'invention, l'étape de contrôle en puissance met en œuvre le contrôle de la puissance micro-ondes en fonction du débit d'injection du gaz.

### [Brève description des figures]

D'autres caractéristiques et avantages de la présente invention apparaîtront à la lecture de la description détaillée ci-après, d'un exemple de mise en œuvre non limitatif, faite en référence aux figures annexées dans lesquelles :
[Fig 1] est une vue schématique en coupe d'un réacteur à micro-ondes selon un premier mode de réalisation qui ne fait pas partie de l'invention pour lequel sont empilés dans l'enceinte, dans le sens de l'écoulement du gaz injecté dans l'enceinte et comprenant des gaz toxiques ou polluants, trois blocs en céramique macroporeuse formant l'au moins un élément en céramique macroporeuse, lequel est chauffé par des micro-ondes provenant d'un guide d'ondes d'entrée ;
[Fig 2] est une vue schématique en perspective du réacteur à micro-ondes de la Figure 1 ;

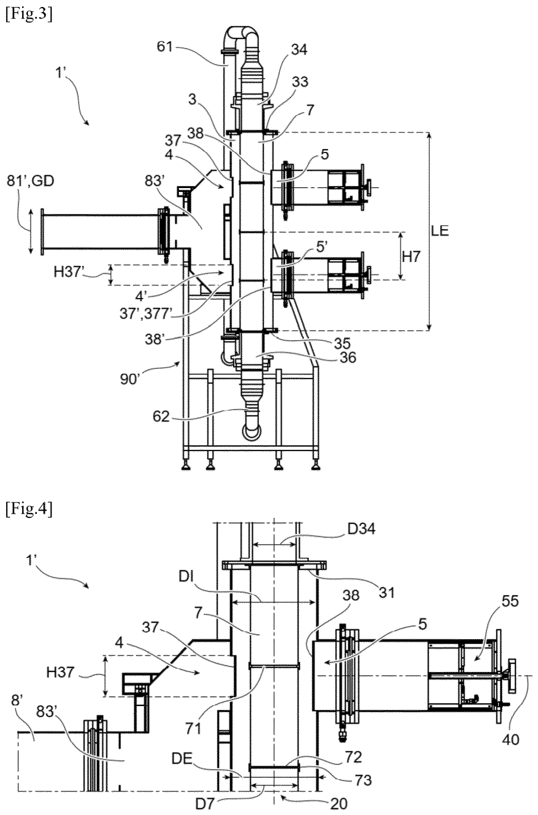

[Fig 3] est une vue schématique en coupe d'un réacteur à micro-ondes de l'invention selon un second mode de réalisation qui fait partie de l'invention pour lequel sont empilés dans l'enceinte, dans le sens de l'écoulement du gaz injecté dans l'enceinte et comprenant des gaz toxiques ou polluants, quatre blocs en céramique macroporeuse formant l'au moins un élément en céramique macroporeuse, lequel est chauffé par des micro-ondes provenant de deux guides d'ondes d'entrée reliés, par l'intermédiaire d'une portion de jonction en forme de « Y » à un guide d'ondes amont prévu pour l'introduction et la propagation desdites micro-ondes ;
[Fig 4] est une vue schématique en coupe rapproché de l'un des deux guides d'ondes d'entrée, dit premier guide d'ondes d'entrée, du réacteur à micro-ondes de la Figure 3 ;
[Fig 5] est une vue en perspective du réacteur à micro-ondes illustrés Figure 3 et Figure 4 ;
[Fig 6] est une vue schématique en perspective (a), et de dessus et de dessous (b) d'un élément en céramique macroporeuse.

### [Description détaillée d'un ou plusieurs modes de réalisation de l'invention]

La description se rapporte à un réacteur à micro-ondes 1, 1' pour un abattement par oxydation thermique de gaz toxiques ou polluants contenus dans un gaz en écoulement.

Dans la suite de la description, il est considéré que le réacteur micro-ondes 1, 1' est utilisé dans un contexte applicatif d'oxydation thermique de composés organiques volatils. Toutefois, le réacteur micro-ondes 1, 1' peut être utilisé dans tout autre contexte applicatif pour lequel des gaz toxiques ou polluants sont transformés par oxydation thermique. En outre, il peut être utilisé pour l'abattement des gaz à effet de serre.

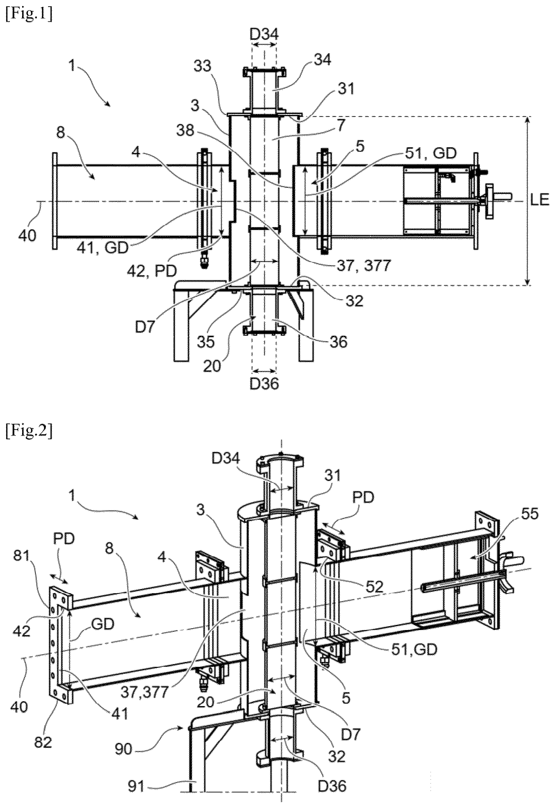

Un premier mode de réalisation du réacteur à micro-ondes 1 est illustré au travers des Figures 1 et 2, ce premier réacteur à micro-ondes 1 ne faisant pas partie de l'invention. Un second mode de réalisation du réacteur à micro-ondes 1' est illustré au travers des Figures 3 à 5, ce second réacteur à micro-ondes 1' faisant partie de l'invention. L'invention ne se limite pas à ce second mode de réalisation décrit et illustré.

En référence aux Figures 1 et 2, le réacteur à micro-ondes 1 comprend :
- une enceinte 3 réalisée dans un matériau réfléchissant aux micro-ondes et s'étendant longitudinalement selon un axe d'écoulement 20 pour un écoulement, à l'intérieur de ladite enceinte 3, du gaz contenant des composés organiques volatils ;
- un guide d'ondes d'entrée 4 couplé à l'enceinte 3 et s'étendant selon un axe de propagation 40 orthogonal à l'axe d'écoulement 20 pour une propagation de micro-ondes le long de cet axe de propagation 40.

Le réacteur à micro-ondes 1 repose sur une embase de support 90 munie de plusieurs pieds de support 91, éventuellement des pieds de support 91 ajustables verticalement, de sorte que l'enceinte 3 est surélevée du sol grâce à l'embase de support 90.

Le guide d'ondes d'entrée 4 est définie par une section rectangulaire ayant : deux grands côtés 41 définissant une grande dimension GD, et deux petits côtés 42 définissant une petite dimension PD inférieure à la grande dimension GD. Les grands côtés 41 du guide d'ondes d'entrée 4 sont parallèles à l'axe d'écoulement 20, tandis que les petits côtés 42 du guide d'ondes d'entrée 4 sont orthogonaux à l'axe d'écoulement.

L'axe d'écoulement 20 est un axe vertical de sorte que l'enceinte 3 s'étend verticalement, et l'axe de propagation 40 est un axe horizontal de sorte que le guide d'ondes d'entrée 4 s'étend horizontalement

L'enceinte 3 présente :
- un diamètre externe DE mesuré parallèlement aux petits côtés 42 du guide d'ondes d'entrée, et qui est supérieur à la petite dimension PD du guide d'ondes d'entrée qui est fixé transversalement sur l'enceinte 3 ;
- un diamètre interne DI inférieur au diamètre externe DE ;
- une longueur d'enceinte LE mesurée le long de l'axe d'écoulement 20 entre une première extrémité 31 et une seconde extrémité 32 opposée, et qui est strictement supérieure à la grande dimension GD du guide d'ondes d'entrée 4.

Il est envisageable que le guide d'ondes d'entrée 4 soit fixé transversalement sur l'enceinte 3 :
- à une distance de la première extrémité 31 comprise entre 0,4 et 0,6 fois la longueur d'enceinte LE (donc substantiellement au milieu de l'enceinte 3), ou bien
- à une distance de la première extrémité 31 comprise entre 0,1 et 0,4 fois la longueur d'enceinte LE (donc substantiellement plus proche d'une extrémité 31, 32 de l'enceinte 3).

Le réacteur à micro-ondes comprend également un guide d'ondes de sortie 5 fixé transversalement sur l'enceinte 3 de manière diamétralement opposée au guide d'ondes d'entrée 4. Le guide d'ondes de sortie 5 s'étend selon l'axe de propagation 40 et a une section rectangulaire avec :
- deux grands côtés 51 égaux à la grande dimension GD et parallèles à l'axe d'écoulement 20, et
- deux petits côtés 52 égaux à ma petite dimension PD et orthogonaux à l'axe d'écoulement 20.

L'enceinte 3 comprend :
- une fenêtre d'entrée 37 qui est entourée par le guide d'onde d'entrée 4 afin de coupler l'enceinte 3 au guide d'ondes d'entrée 4, et ainsi propager les micro-ondes à l'intérieur de l'enceinte 3, et
- une fenêtre de sortie 38 qui est entourée par le guide d'onde de sortie 5 afin de coupler l'enceinte 3 au guide d'ondes de sortie 5, et ainsi propager les micro-ondes depuis l'intérieur de l'enceinte 3 vers le guide d'onde de sortie 5.

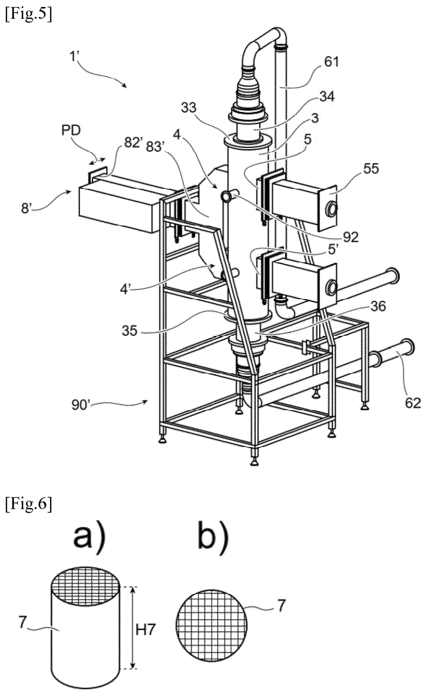

L'enceinte 3 comporte des couvercles 33, 35 prévus sur la première extrémité 31 et la seconde extrémité 32. Chacun des deux couvercles 33, 35 est muni d'un manchon de raccordement de raccordement 34, 36 pour raccorder respectivement la première extrémité 31 et la seconde extrémité 32 de l'enceinte 3 à une canalisation 61 servant à injecter le gaz à traiter dans l'enceinte 3 et à une canalisation 62 pour une mise en écoulement du gaz une fois traité. Les deux canalisations 61, 62 sont illustrées Figure 3 et Figure 5.

En référence aux Figure 1, 2 et 6, le traitement par oxydation thermique des composés organiques volatils et réalisé au moyen d'au moins un élément en céramique macroporeuse 7 qui est contenu dans l'enceinte 3, qui présente un diamètre d'élément D7 compris entre 0,25 et 0,8 fois le diamètre interne DI de l'enceinte 3.

Au sens de l'invention, lorsque le gaz atteint l'au moins un élément en céramique macroporeuse 7, le gaz traverse ce ou chaque élément en céramique macroporeuse 7, sans le contourner. Aussi, il n'est nul besoin de recourir à un quelconque tube diélectrique transparent aux micro-ondes pour confiner l'écoulement du gaz.

En d'autres termes, quel que soit le mode de réalisation, le réacteur à micro-ondes 1, 1' ne comprend pas un tube diélectrique, réalisé dans une matière transparente aux micro-ondes, disposé à l'intérieur de l'enceinte 3 du réacteur à micro-ondes 1, 1' et recevant intérieurement l'au moins élément en céramique macroporeuse 7.

L'au moins un élément en céramique macroporeuse 7 possède des propriétés diélectriques lui permettant d'augmenter rapidement sa température par absorption de rayonnements électromagnétiques. Lorsqu'il s'élève en température, l'au moins un élément en céramique macroporeuse 7 chauffe les gaz le traversant. Lorsque cette température, dite température de chauffage, atteint une plage de température dite plage de température d'oxydation thermique, il oxyde thermiquement les composés organiques volatils. Lorsqu'ils sont complètements traités (c'est-à-dire oxydés thermiquement), les composés organiques volatils se transforment (ou sont convertis) en eau (H₂O) et en dioxyde de carbone (CO₂). La température dans cette plage requise pour oxyder thermiquement une quantité de composés organiques volatils contenu dans un gaz dépend en partie de la nature/du type dudit composés organiques volatils. Non limitativement, les composés organiques volatils peuvent correspondre à du xylène, de l'isopropanol, du méthyléthylcétone (appelé aussi butanone).

Géométriquement, l'au moins un élément en céramique macroporeuse 7 présente une hauteur d'élément H7 s'étendant dans l'enceinte 3 le long de l'axe d'écoulement 20, ainsi qu'un diamètre d'élément D7. Plus le diamètre d'élément D7 est grand, plus l'oxydation thermique des composés organiques volatils est accélérée. Également, plus la hauteur d'élément H7 de l'au moins élément en céramique macroporeuse 7 est grande, plus le temps de contact du gaz avec l'au moins un élément en céramique macroporeuse 7 est important. Si l'au moins un élément en céramique macroporeuse 7 est de plus chauffé uniformément, alors l'oxydation thermique est plus efficace et le taux de conversion des composés organiques volatils plus élevé.

Comme illustré Figure 6, l'au moins un élément en céramique macroporeuse 7 possède également une géométrie dite en « nid d'abeille » afin d'avoir une surface d'échange très importante avec les gaz le traversant, pour pouvoir les chauffer et les oxyder thermiquement plus rapidement. Lorsque l'enceinte 3 est de section circulaire avec un diamètre externe DE correspondant à la dimension latérale, comme c'est le cas des deux modes de réalisation présentés, l'au moins un élément en céramique macroporeuse 7 se présente alors sous la forme d'un cylindre de structure macroporeuse (l'intérieur du cylindre présente sur toute la hauteur d'élément H7 une structure macroporeuse).

Dans un mode de réalisation de l'invention, l'au moins un élément en céramique macroporeuse 7 est en carbure de silicium qui est avantageux pour monter rapidement en température lorsqu'exposé aux micro-ondes. La plage de température d'oxydation thermique du carbure de silicium est comprise entre 800°C et 1000°C.

Dans d'autres modes de réalisation de l'invention, l'au moins un élément en céramique macroporeuse 7 est choisi parmi : la zircone, la chromite de lanthane, des oxydes métalliques

Dans un mode de réalisation de l'invention, l'au moins un élément en céramique macroporeuse 7 est monobloc, c'est à dire qu'il est formé d'un seul tenant.

Dans d'autres modes de réalisation de l'invention, comme ceux illustrés dans cette description, l'au moins un élément en céramique macroporeuse 7 est formé en empilant dans le sens de l'axe d'écoulement 20 plusieurs blocs en céramique macroporeuse (présentant chacun la structure illustrée Figure 6). Dans le premier mode de réalisation présenté, l'au moins un élément en céramique macroporeuse 7 est par l'empilement de trois blocs en céramique macroporeuse.

L'au moins un élément en céramique macroporeuse 7, ou chaque bloc en céramique macroporeuse le composant, présente deux extrémités 71, 72 opposées le long de l'axe d'écoulement. Lorsque le diamètre d'élément D7 de l'au moins un élément en céramique macroporeuse 7, ou bien des blocs en céramique macroporeuse, est strictement inférieur au diamètre interne DI de l'enceinte 3, l'au moins un élément en céramique macroporeuse 7 ou chaque bloc en céramique macroporeuse est maintenu dans l'enceinte 3 au moyen d'éléments de maintien 73, par exemple des couronnes ou des entretoises, fixés autour des deux extrémités 71, 72. Les éléments de maintien 71, 72 participent également au confinement du gaz pour qu'il s'écoule au travers de l'élément en céramique macroporeuse 7 ou de chaque bloc en céramique macroporeuse le formant.

Quel que soit le mode de réalisation du réacteur à micro-ondes, il est prévu que l'au moins élément en céramique macroporeuse soit positionné au moins en face de l'au moins une fenêtre d'entrée 37, 37' par laquelle pénètrent les micro-ondes à l'intérieur de l'enceinte 3.

L'intérêt de ce positionnement et de ce rapport de hauteur est de pouvoir chauffer progressivement l'au moins un élément en céramique macroporeuse 7 afin qu'in fine, son élévation de température soit uniforme dans tous son volume. Dans l'exemple de réalisation donné Figure 1 et Figure 2, le bloc en céramique macroporeuse central de l'empilement formant l'élément en céramique macroporeuse 7 est positionné en face de la fenêtre d'entrée 37. Lorsque les micro-ondes commencent à se propager dans l'enceinte 3, ce bloc central va commencer à monter en température comparativement aux autres blocs. Au fil de la propagation des micro-ondes, les autres blocs de l'empilement vont également monter en température. In fine, l'élévation en température sera homogène dans tout l'empilement/l'élément en céramique macroporeuse 7.

Afin de chauffer progressivement l'au moins un élément en céramique macroporeuse, il est également envisageable, quel que soit le mode de réalisation, que :
- la hauteur d'élément H7 de l'au moins un élément en céramique macroporeuse 7 soit supérieure à la hauteur de fenêtre H37 de l'au moins une fenêtre d'entrée 37, 37' ; et/ou
- que la longueur d'enceinte LE puisse être comprise entre 1,5 fois et 6 fois supérieure à la grande dimension GD du guide d'ondes d'entrée 4. Ce rapport de dimensions permet d'éviter l'apparition d'un phénomène de résonance à l'intérieur de l'enceinte, et d'assurer une absorption progressive des micro-ondes par l'au moins un élément en céramique macroporeuse 7 qui, finalement, sera chauffé de manière homogène dans tout son volume.

Concernant le premier point, l'au moins un élément en céramique macroporeuse, qu'il soit monobloc ou formé par l'empilement de plusieurs blocs, peut posséder une hauteur d'élément H7 égale à au moins 90 % de la longueur d'enceinte LE.

Dans le premier mode de réalisation présenté Figures 1 et 2, les trois blocs en céramique macroporeuse empilés constituent un élément en céramique macroporeuse 7 dont la hauteur d'élément H7, qui correspond aux hauteurs combinées des trois blocs, est égale à la longueur d'enceinte LE.

Les manchons de raccordement 34, 36 présentent chacun un diamètre de manchon D34, D36 inférieur au diamètre d'élément D7 des trois blocs en céramique macroporeuse.

La sortie du manchon de raccordement 34 est en liaison étanche avec une des extrémités de l'élément en céramique macroporeuse 7, et l'entrée du manchon de raccordement 36 est en liaison étanche avec l'autre extrémité dudit élément en céramique macroporeuse 7. Dans une telle configuration, les risques que le gaz à traiter et une fois traité puisse se propager dans l'enceinte 3 ailleurs que dans l'élément en céramique macroporeuse 7 sont supprimés.

Il est aussi envisageable, comme illustré, de fixer un dispositif de court-circuit sur le guide d'ondes de sortie 5 utilisé comme adaptateur d'impédance pour optimiser/maximiser la transmission du rayonnement micro-ondes à l'élément en céramique macroporeuse 7 et ainsi le chauffer uniformément.

Pour améliorer la pénétration des micro-ondes dans l'élément en céramique macroporeuse 7, il est également possible de délimiter la fenêtre d'entrée 37 par deux bords longitudinaux parallèles aux grands côtés GD du guide d'ondes d'entrée 4 et par deux bords latéraux parallèles aux petits côtés PD du guide d'ondes d'entrée, où les bords longitudinaux présentent une longueur inférieure ou égale à la grande dimension GD et les bords latéraux présentent une longueur inférieure ou égale à la petite dimension PD.

Ainsi, la fenêtre d'entrée 37, qui est de section rectangulaire équivalente ou plus petite que la section rectangulaire du guide d'ondes d'entrée 4, forme un iris d'entrée 377. La taille de l'iris 377 peut être adaptée en vue que l'élément en céramique macroporeuse 7 : s'élève à une température de chauffage comprise dans la plage de température d'oxydation thermique et qui est idéale pour oxyder thermiquement un composés organiques volatils d'une nature donnée, et puisse être maintenu à cette dite température.

Enfin, le guide d'onde d'entrée 4 est relié un guide d'onde amont 8 d'où proviennent les micro-ondes et dont le rôle sera précisé par la suite dans la description. Tout comme le guide d'ondes d'entrée 4, les micro-ondes se propagent à l'intérieur du guide d'ondes amont 8 selon l'axe de propagation 40. Le guide d'onde amont 8 présente une portion rectiligne ayant une section rectangulaire avec deux grands côtés 81 égaux à une grande dimension, et deux petits côtés 82 égaux à une petite dimension inférieure à la grande dimension, les grands côtés 81 étant parallèles à l'axe d'écoulement 20, tandis que les petits côtés 82 sont orthogonaux à celui-ci. Dans le premier mode de réalisation, la grande dimension du guide d'ondes amont 8 est égale à la grande dimension GD du guide d'ondes d'entrée 4, et sa petite dimension est égale à la petite dimension GD du guide d'ondes d'entrée 4.

Globalement, un réacteur à micro-ondes 1, 1' peut comprendre un ou plusieurs guides d'ondes d'entrée, avec chacun des guides d'onde d'entrée débouchant par l'intermédiaire d'une fenêtre d'entrée dans l'enceinte 3 pour y propager des micro-ondes.

En référence aux Figure 3 à Figure 5, dans le second mode de réalisation décrit et qui fait partie de l'invention, le réacteur à micro-ondes 1' comprend, en sus du guide d'ondes d'entrée 4, dit premier guide d'ondes d'entrée, un second guide d'ondes d'entrée 4' décalé du premier guide d'onde 4 selon une direction parallèle à l'axe d'écoulement 20. Le second guide d'ondes d'entrée entoure une seconde fenêtre d'entrée 37' qui est décalée selon une direction parallèle à l'axe d'écoulement 20 par rapport à la fenêtre d'entrée 37, appelée dans ce mode de réalisation première fenêtre d'entrée.

Le premier guide d'ondes d'entrée 4 et le second guide d'ondes d'entrée 4' sont réalisés dans le même matériau et sont géométriquement identiques (c'est-à-dire qu'ils présentent tous deux la même grande dimension GD et la même petite dimension PD), de sorte que les cinématiques de propagation des micro-ondes dans les deux guides d'ondes d'entrée 4, 4' soient les mêmes.

Le réacteur à micro-ondes 1' comprend un élément en céramique macroporeuse 7 formé par l'empilement de quatre blocs en céramique macroporeuse.

Dans différente variantes de réalisation, il est prévu que l'élément en céramique macroporeuse puisse s'étendre au moins depuis la première fenêtre d'entrée 37 jusqu'à la seconde fenêtre d'entrée 37', signifiant qu'il :
- possède une hauteur d'élément H7 au moins égale aux hauteurs des deux fenêtres d'entrée H37, H37' auxquelles est additionnée la distance les séparant toutes deux dans le sens de l'axe d'écoulement 20, lesdites deux fenêtres d'entrée, et
- est disposé dans l'enceinte 3 face aux deux fenêtres d'entrée 37, 37'.

C'est le cas du second mode de réalisation présenté où la hauteur d'élément H7 de l'élément en céramique macroporeuse 7 est égale à la longueur d'enceinte LE. Plus précisément, la première fenêtre d'entrée 37 fait face aux deux blocs en céramique macroporeuse les plus proches de la première extrémité 31, alors que la seconde fenêtre d'entrée 37' fait face aux deux blocs en céramique macroporeuse les plus proches de la seconde extrémité 32.

Comme illustré, chacune des deux fenêtres d'entrée forme un iris d'entré 377, 377'. Les deux iris d'entrée 377, 377' sont géométriquement identiques.

Dans ce second mode de réalisation, l'élément en céramique macroporeuse 7, tel qu'il est positionné dans l'enceinte 3, est chauffé plus rapidement comparativement au premier mode de réalisation pour lequel le réacteur à micro-ondes 1 possède qu'un seul guide d'ondes d'entrée 4. Etant donné que les deux guides d'ondes d'entrée 4, 4' et les deux fenêtres d'entrée 37, 37' sont structurellement et géométriquement identiques, le positionnement de l'élément en céramique macroporeuse 7 dans l'enceinte 3 permet aussi de le chauffer uniformément.

Le réacteur à micro-ondes 1' comprend également, en sus du guide d'ondes de sortie 5, appelé premier guide d'ondes de sortie, un autre guide d'ondes de sortie, appelé second guide d'ondes de sortie 5'. Le premier guide d'onde de sortie 5 (respectivement le second guide d'ondes de sortie) est fixé transversalement sur l'enceinte 3 de manière diamétralement opposée au premier guide d'ondes d'entrée 4 (respectivement au second guide d'ondes d'entrée 4').

Le second guide d'ondes de sortie 5' :
- s'étend parallèlement à l'axe de propagation 40 ;
- est composé du même matériau que le premier guide de sortie 5 ;
- possède la même géométrie que le premier guide de sortie 5.

L'enceinte 3 présenta lors, en de la fenêtre de sortie 38, dite première fenêtre de sortie, une seconde fenêtre de sortie 38' qui est entourée par le second guide de sortie 5'. Les deux fenêtres de sortie 3 peuvent présenter une géométrie identique. Dans ce second mode de réalisation, les bords longitudinaux des deux fenêtres de sortie 38, 38' sont égaux à la grande dimension GD, et les bords latéraux des deux fenêtres de sortie 38, 38' sont égaux à la petite dimension PD.

Le second guide d'ondes de sortie 5' peut également, de la même manière que le premier guide d'ondes de sortie 5, et comme illustré, être muni d'un dispositif de court-circuit.

Le premier guide d'onde d'entrée 4 et le second guide d'onde d'entrée 4' sont reliés, au moyen d'une portion de jonction 83' en « Y », à un même guide d'ondes amont 8'prévu pour introduire les micro-ondes à l'intérieur de chacun d'eux.

Le guide d'onde amont 8' présente une portion rectiligne ayant une section rectangulaire avec deux grands côtés 81' égaux à une grande dimension, et deux petits côtés 82' égaux à une petite dimension inférieure à la grande dimension, les grands côtés 81' étant parallèles à l'axe d'écoulement 20, tandis que les petits côtés 82' sont orthogonaux à celui-ci. Dans le second mode de réalisation, la grande dimension du guide d'ondes amont 8' est égale à la grande dimension GD des deux guides d'ondes d'entrée 4, 4', et sa petite dimension est égale à la petite dimension GD des deux guides d'ondes d'entrée 4, 4'.

Le guide d'onde amont 8' présente au moins une portion rectiligne ayant une section rectangulaire avec deux grands côtés 81' égaux à la grande dimension GD, et deux petits côtés 82' égaux à la petite dimension PD, les grands côtés 81' étant parallèles à l'axe d'écoulement 20, tandis que les petits côtés 82' sont orthogonaux à celui-ci.

Il est ainsi possible, au moyen du guide d'ondes amont 8', de réaliser une propagation de micro-ondes simultanément dans le premier guide d'ondes d'entrée 4 et dans le second guide d'ondes d'entrée 4', parallèlement à l'axe de propagation 40.

Il est également avantageux que les grands côtés 81' et les petits côtés 82' du guide d'ondes amont soient respectivement égaux à la grande dimension GD et la petite dimension PD des guides d'ondes d'entrée 4, 4' car la propagation des micro-ondes dans le guide d'ondes amont 8' est identique à celle dans le premier et le second guides d'ondes d'entrée 4, 4'.

Enfin, comparativement au premier mode de réalisation, le réacteur à micro-ondes 1' est ici disposé sur une embase de support 90', dont la géométrie est en particulier adaptée à celle des guides d'ondes d'entrée 4, 4' et du guide d'ondes amont 8'.

Afin de procéder à une oxydation thermique des composés organiques volatils que peuvent contenir des gaz, le réacteur à micro-ondes 1, 1' est intégré à une installation micro-ondes (non illustrée) qui comprend également :
- au moins un générateur à micro-ondes conformé pour générer des micro-ondes pour des fréquences comprise dans une plage des fréquences des micro-ondes comprise entre 300 MHz à 30 GHz. L'au moins un générateur à micro-ondes est raccordé aux guides d'ondes d'entrée 4, 4' des réacteurs à micro-ondes 1, 1' par l'intermédiaire des guides d'ondes amont 8, 8'. Autrement dit, les micro-ondes se propageant à l'intérieur des guides d'ondes d'entrée 4, 4' et pénétrant dans l'enceinte 3 des réacteurs à micro-ondes 1, 1' proviennent de l'au moins un générateur à micro-ondes. Dans les deux modes de réalisation présenté, le guide d'ondes amont 8, 8' présente une section rectiligne. Toutefois, dans d'autres variantes de réalisation, le guide d'ondes amont 8, 8' peut être vertical et/ou être horizontal et/ou présenter des coudes et/ou être formé de plusieurs sections de guide d'ondes selon la disposition et la localisation de l'au moins un générateur à micro-ondes par rapport au réacteur à micro-ondes 1, 1' et selon des inclinaisons de l'axe d'écoulement 20 et de l'axe de propagation 40 ;
- un système d'injection servant à injecter à l'intérieur de l'enceinte 3 du réacteur à micro-ondes 1, 1' le gaz à traiter. Le système d'injection est raccordé à la première extrémité 31 de l'enceinte 3 au moyen de la canalisation 61 ;
- un système d'échappement pour un échappement du gaz une fois traité, de l'eau (H₂O) et du dioxyde de carbone (CO₂) produits suite à l'oxydation thermique des composés organiques volatils, hors de l'enceinte 3 du réacteur à micro-ondes 1, 1'. Le système d'échappement est raccordé à la seconde extrémité 32 de l'enceinte 3 au moyen de la canalisation 62 ;
- une unité de contrôle raccordée au moins à l'au moins un générateur à micro-ondes et configurée pour contrôler une puissance micro-ondes en sortie de l'au moins un générateur à micro-ondes ; et ainsi contrôler la température de l'au moins un élément en céramique macroporeuse 7. Une telle unité de contrôle est par exemple du type comprenant un automate, un processeur, un microcontrôleur, une carte électronique ou tout autre moyen de calcul et de traitement équivalent.

Plus la puissance délivrée par l'au moins un générateur à micro-ondes est élevée, plus l'au moins un élément en céramique macroporeuse 7 monte rapidement en température.

L'installation micro-ondes met en œuvre un procédé de traitement micro-ondes démarrant par une étape préliminaire de chauffage durant laquelle l'au moins un générateur à micro-ondes génère des micro-ondes jusqu'à ce que l'au moins un élément en céramique macroporeuse 7 atteigne une température de chauffage comprise dans la plage de température d'oxydation thermique. Comme précédemment indiqué, cette plage de température, pour un élément en céramique macroporeuse 7 en carbure de silicium, est comprise entre 800° et 1000°C.

Une fois la température de chauffage de l'au moins un élément en céramique macroporeuse dans la plage d'oxydation thermique, l'unité de contrôle met en œuvre une étape de contrôle en puissance durant laquelle elle contrôle la puissance micro-ondes en sortie de l'au moins un générateur à micro-ondes afin de maintenir la température de chauffage dans la plage de température d'oxydation thermique. Autrement dit, en fonction de la température de chauffage de l'au moins un élément en céramique macroporeuse 7, l'unité de contrôle envoie des consignes de puissance sous la forme de signaux à l'au moins un générateur à micro-ondes pour baisser ou augmenter ou éventuellement maintenir, la puissance qu'il délivre.

La température de chauffage de l'au moins un élément en céramique macroporeuse 7 est mesurée par un dispositif de mesure de température qui peut être en communication avec l'unité de contrôle, au moyen d'un protocole de communication radiofréquence, ou bien raccordé à celle-ci. Le dispositif de mesure de température communique donc à l'unité de contrôle une donnée de température relative à l'au moins élément en céramique macroporeuse, laquelle à réception de cette donnée de température transmet des consignes de puissance appropriées. Le dispositif de mesure de température est un capteur infra-rouge, par exemple une caméra ou un pyromètre, placé sur une bride de lucarne 92 disposée sur l'enceinte 3 du réacteur à micro-ondes 1, 1' (voir Figure 5).

Suite à l'étape préliminaire de chauffage, et parallèlement à l'étape de contrôle, l'installation micro-ondes met en œuvre une étape d'injection durant laquelle le gaz contenant des composés organiques volatils est injecté en continu dans l'enceinte 3 en fonction d'un débit d'injection donné. Le débit d'injection du gaz est mesuré au moyen d'un débitmètre compris dans l'installation et qui peut être en communication avec l'unité de contrôle, au moyen d'un protocole de communication radiofréquence, ou bien raccordé à celle-ci. Le débitmètre transmet le débit d'injection du gaz mesuré à l'unité de contrôle, laquelle à réception du dit débit d'injection du gaz peut transmettre, en fonction de celui-ci et également de la température de chauffage de l'au moins un élément en céramique macroporeuse 7, des consignes de puissance à l'au moins un générateur à micro-ondes pour augmenter, ou baisser, ou maintenant la puissance qu'il délivre.

Comme indiqué précédemment, lorsqu'ils sont complètement traités/convertis, les composés organiques volatils d'un gaz sont transformés en eau et en dioxyde de carbone. Cependant, dans le cas où ils ne seraient que partiellement traités, ils peuvent générer des émissions de produits nocifs tels que le monoxyde de carbone (CO), l'oxyde d'azote (NOx), ou des composés de types aldéhyde.

Le débit d'injection du gaz injecté dans l'enceinte 3 du réacteur à micro-ondes 1, 1' influe sur l'efficacité du traitement par oxydation thermique des composés organiques volatils, et donc sur le taux de conversion. En effet, plus le débit d'injection du gaz est élevé, plus ce dernier se propage rapidement dans l'enceinte, et plus le temps de contact entre les composés organiques volatils et l'au moins un élément en céramique macroporeuse 7 est réduit.

Autrement dit, afin de convertir complètement les composés organiques volatils, et que le traitement thermique ne soit pas partiel, la température de chauffage de l'au moins élément en céramique macroporeuse 7 doit être adaptée dans la plage de température d'oxydation thermique en fonction du débit d'injection du gaz. Augmenter le débit d'injection du gaz implique d'augmenter la température de chauffage de l'au moins un élément en céramique macroporeuse 7, ce qui signifie que l'au moins un générateur à micro-ondes doit alors fournir plus de puissance. A l'inverse, en réduisant le débit d'injection du gaz, le temps de contact entre le gaz et l'au moins un élément en céramique macroporeuse 7 est plus long. Les réactions d'oxydation peuvent alors être complétées pour des températures de chauffage plus basses de la plage de température d'oxydation thermique, et donc des puissances micro-ondes délivrées par l'au moins un générateur à micro-ondes plus faibles. C'est pourquoi lors de l'étape de contrôle en puissance, l'unité de contrôle envoie des consignes de puissance à l'au moins un générateur à micro-ondes en fonction du débit d'injection du gaz et de la température de chauffage de l'au moins un élément en céramique macroporeuse lorsque débute l'oxydation thermique des composés organiques volatils.

Le réacteur à micro-ondes 1, 1' est en capacité de traiter, lorsque son diamètre interne est égale à 150 mm, des gaz contenant des composés organiques volatils pour des débits d'injection du gaz de l'ordre de 30 m³/h (soit environ 500 L/min) pour des concentrations minimales en composés organiques volatils totaux de l'ordre de 15 000 mg éq. C/Nm³ dans une atmosphère appauvrie en oxygène, c'est-à-dire une atmosphère contenant à minima 6 % d'oxygène (vol %) sous inertage d'azote, cela sans formation de coproduits nocifs ou du moins formation de ces coproduits à des concentrations inférieures à leur VLE. Pour traiter de tels débits d'injection de gaz et de telles concentrations, l'au moins un générateur à micro-ondes doit fournir avantageusement une puissance micro-ondes maximale comprise entre 13 kW et 15 kW. Le temps nécessaire à la traversée du gaz et à une conversion à 99% des gaz toxiques ou polluants qu'il contient pour de tels débits d'injection du gaz et de telles concentrations est de l'ordre d'une à deux secondes.

## Revendications

1. Réacteur à micro-ondes (1,1') pour un abattement par oxydation thermique de gaz toxiques ou polluants contenus dans un gaz en écoulement, ledit réacteur à micro-ondes (1, 1') comprenant :
- une enceinte (3) réalisée dans un matériau réfléchissant aux micro-ondes et s'étendant longitudinalement selon un axe d'écoulement (20) pour un écoulement du gaz à l'intérieur de ladite enceinte (3) ;
- au moins un guide d'ondes d'entrée (4, 4') couplé à l'enceinte (3) et s'étendant selon un axe de propagation (40) orthogonal à l'axe d'écoulement (20) pour une propagation de micro-ondes le long dudit axe de propagation (40), ledit au moins un guide d'ondes d'entrée (4, 4') possédant une section rectangulaire avec deux grands côtés (41) définissant une grande dimension (GD) et deux petits côtés (42) définissant une petite dimension (PD) inférieure à la grande dimension (GD), tels que les grands côtés (41) du guide d'ondes d'entrée (4, 4') sont parallèles à l'axe d'écoulement (20), tandis que les petits côtés (42) de l'au moins un guide d'ondes d'entrée (4, 4') sont orthogonaux à l'axe d'écoulement (20) ;
dans lequel l'enceinte (3) présente :
- un diamètre externe (DE), ledit diamètre externe (DE) étant supérieur à la petite dimension (PD) de l'au moins un guide d'ondes d'entrée (4, 4') qui est fixé transversalement sur l'enceinte (3),
- un diamètre interne (DI) inférieur au diamètre externe (DE), et
- une longueur d'enceinte (LE) mesurée le long de l'axe d'écoulement (20) entre une première extrémité (31) et une seconde extrémité (32) opposée, ladite longueur d'enceinte (LE) étant strictement supérieure à la grande dimension (GD) du guide d'ondes d'entrée (4, 4') ;
dans lequel est prévue sur l'enceinte (3) au moins une fenêtre d'entrée (37) entourée par l'au moins un guide d'ondes d'entrée (4, 4') pour une propagation de micro-ondes à travers l'au moins une fenêtre d'entrée (37) à l'intérieur de l'enceinte (3),
et dans lequel ledit réacteur à micro-ondes (1) comprend, à l'intérieur de l'enceinte (3), au moins un élément en céramique macroporeuse (7) positionné au moins en face de l'au moins une fenêtre d'entrée (37), qui présente un diamètre d'élément (D7) compris entre 0,25 et 0,8 fois le diamètre interne (DI) de l'enceinte (3), et qui confine l'écoulement du gaz au travers de l'au moins un élément en céramique macroporeuse (7) à l'intérieur de l'enceinte (3) ;
**caractérisé en ce que**
- l'au moins un guide d'ondes d'entrée (4, 4') comprend un premier guide d'onde d'entrée (4) et un second guide d'onde d'entrée (4') qui sont décalés l'un par rapport à l'autre selon une direction parallèle à l'axe d'écoulement (20),
- l'au moins une fenêtre d'entrée (37) comprend une première fenêtre d'entrée (37) et une seconde fenêtre d'entrée (37') qui sont également décalées l'une par rapport à l'autre selon une direction parallèle à l'axe d'écoulement (20), la première fenêtre d'entrée (37) étant entourée par le premier guide d'onde d'entrée (4) et la seconde fenêtre d'entrée (37') étant entourée par le second guide d'onde d'entrée (4') ;
et dans lequel l'au moins un élément en céramique macroporeuse (7) est positionné au moins en face de la première fenêtre d'entrée (37) et de la seconde fenêtre d'entrée (37') ; et
**en ce que** le premier guide d'onde d'entrée (4) et le second guide d'onde d'entrée (4') sont reliés à un même guide d'ondes amont (8') prévu pour l'introduction de micro-ondes à l'intérieur de chacun desdits premier guide d'onde d'entrée (4) et second guide d'onde d'entrée (4'), ledit guide d'ondes amont (8') présentant au moins une portion rectiligne présentant une section rectangulaire avec deux grands côtés (81') définissant une grande dimension (GD) et deux petits côtés (82') définissant une petite dimension (PD) inférieure à la grande dimension (GD), les grands côtés (81') dudit guide d'ondes amont (8') étant parallèles à l'axe d'écoulement (20), tandis que les petits côtés (82') dudit guide d'ondes amont (8') sont orthogonaux à l'axe d'écoulement (20).

2. Réacteur à micro-ondes (1,1') selon la revendication 1, comprenant au moins un guide d'ondes de sortie (5) fixé transversalement sur l'enceinte (3) de manière diamétralement opposée à l'au moins un guide d'ondes d'entrée (4, 4'), où :
- ledit au moins un guide d'ondes de sortie (5) s'étend selon l'axe de propagation (40) et a une section rectangulaire avec deux grands côtés (51) définissant une grande dimension (GD) et deux petits côtés (52) définissant une petite dimension (PD) inférieure à la grande dimension (GD), les grands côtés (51) de l'au moins un guide d'ondes de sortie (5) étant parallèles à l'axe d'écoulement (20), tandis que les petits côtés (52) de l'au moins un guide d'ondes de sortie (5) sont orthogonaux à l'axe d'écoulement (20), la grande dimension (GD) de l'au moins un guide d'ondes de sortie (5) étant équivalente à la grande dimension (GD) de l'au moins un guide d'ondes d'entrée (4, 4') et la petite dimension (PD) de l'au moins un guide d'ondes de sortie (5) étant équivalente à la petite dimension (PD) de l'au moins un guide d'ondes d'entrée (4, 4') ;
- ladite enceinte (3) présente au moins une fenêtre de sortie (38) diamétralement opposée à l'au moins fenêtre d'entrée (37) et entourée par l'au moins un guide d'ondes de sortie (5) pour une propagation de micro-ondes à travers l'au moins une fenêtre de sortie (38).

3. Réacteur à micro-ondes (1') selon la revendication 1 ou 2, dans lequel l'au moins un élément en céramique macroporeuse (7) s'étend au moins depuis la première fenêtre d'entrée (37) jusqu'à la seconde fenêtre d'entrée (37').

4. Réacteur à micro-ondes (1') selon l'une quelconque des revendications précédentes, dans lequel l'au moins un élément en céramique macroporeuse (7) comprend un premier élément en céramique macroporeuse positionné au moins en face de la première fenêtre d'entrée (37), et un second élément en céramique macroporeuse distinct du premier élément en céramique macroporeuse et positionné au moins en face de la seconde fenêtre d'entrée (37').

5. Réacteur à micro-ondes (1, 1') selon l'une quelconque des revendications précédentes, dans lequel l'au moins un élément en céramique macroporeuse (7) est monobloc ou est formé d'un empilement d'au moins deux blocs en céramique macroporeuse dans le sens de l'axe d'écoulement (20).

6. Installation micro-ondes pour un abattement par oxydation thermique de gaz toxiques ou polluants contenus dans un gaz en écoulement, ladite installation micro-ondes comprenant au moins :
- un réacteur à micro-ondes (1,1') selon l'une quelconque des revendications 1 à 5,
- au moins un générateur à micro-ondes, raccordé à l'au moins un guide d'ondes d'entrée (4, 4') du réacteur à micro-ondes (1, 1').

7. Installation micro-ondes selon la revendication 6, comprenant une unité de contrôle raccordée à l'au moins un générateur à micro-ondes et configurée pour contrôler une puissance micro-ondes en sortie de l'au moins un générateur à micro-ondes et ainsi pour réguler une température de l'au moins un élément en céramique macroporeuse (7) dans une plage de température d'oxydation thermique.

8. Installation micro-ondes selon la revendication 7, comprenant un dispositif de mesure de température conformé pour mesurer la température de l'au moins un élément en céramique macroporeuse (7), l'unité de contrôle étant au moins en communication avec ledit dispositif de mesure de température et configurée pour contrôler la puissance micro-ondes en fonction de la mesure de la température de l'au moins un élément en céramique macroporeuse (7).

9. Installation micro-ondes selon l'une quelconque des revendications 6 à 8, comprenant :
- un système d'injection pour une injection du gaz avec un débit d'injection donné à l'intérieur de l'enceinte (3) du réacteur à micro-ondes (1, 1'), ledit système d'injection comprenant une canalisation d'injection (61) raccordée à la première extrémité (31) de l'enceinte (3) pour injecter le gaz au niveau de ladite première extrémité (31) ;
- un système d'échappement pour un échappement du gaz hors de l'enceinte (3) du réacteur à micro-ondes (1, 1'), ledit système d'échappement comprenant une canalisation d'échappement (62) raccordée à la seconde extrémité (32) de l'enceinte (3) pour évacuer le gaz au niveau de ladite seconde extrémité (32) après traitement au travers de l'au moins un élément en céramique macroporeuse (7).

10. Installation micro-ondes selon les revendications 7 et 9, comprenant un débitmètre pour mesurer le débit d'injection du gaz, et dans laquelle l'unité de contrôle est au moins en communication avec le débitmètre et est configurée pour contrôler la puissance micro-ondes en fonction du débit d'injection du gaz.

11. Procédé de traitement micro-ondes pour un abattement par oxydation thermique de gaz toxiques ou polluants contenus dans un gaz en écoulement, ledit procédé de traitement micro-ondes étant mis en œuvre par une installation micro-ondes selon l'une quelconque des revendications 6 à 10 et comprenant au moins les étapes suivantes :
- une étape préliminaire de chauffage durant laquelle l'au moins un générateur à micro-ondes génère des micro-ondes jusqu'à ce que l'au moins un élément en céramique macroporeuse (7) atteigne une température de chauffage comprise dans une plage de température d'oxydation thermique ;
- une étape d'injection, se déroulant après l'étape préliminaire de chauffage, durant laquelle est injecté en continu dans l'enceinte (3) le gaz avec un débit d'injection donné.

12. Procédé de traitement micro-ondes selon la revendication 11, comprenant une étape de contrôle en puissance durant laquelle est contrôlée une puissance micro-ondes en sortie de l'au moins un générateur à micro-ondes pour réguler une température de l'au moins un élément en céramique macroporeuse (7) dans la plage de température d'oxydation thermique.

13. Procédé de traitement micro-condes selon la revendication 12, dans lequel l'étape de contrôle en puissance met en œuvre le contrôle de la puissance micro-ondes en fonction du débit d'injection du gaz.

## Patentansprüche

1. Mikrowellenreaktor (1,1') zum Abbauen von giftigen oder schadstoffhaltigen Gasen, die in einem strömenden Gas enthalten sind, durch thermische Oxidation, wobei der Mikrowellenreaktor (1, 1') umfasst:
- ein Gehäuse (3), das aus einem mikrowellenreflektierenden Material hergestellt ist und sich in Längsrichtung entlang einer Strömungsachse (20) für eine Strömung des Gases im Inneren des Gehäuses (3) erstreckt;
- mindestens einen Eingangswellenleiter (4, 4'), der mit dem Gehäuse (3) gekoppelt ist und sich entlang einer Ausbreitungsachse (40) orthogonal zur Strömungsachse (20) für eine Mikrowellenausbreitung entlang der Ausbreitungsachse (40) erstreckt, wobei der mindestens eine Eingangswellenleiter (4, 4') einen rechteckigen Querschnitt mit zwei großen Seiten (41), die eine große Abmessung (GD) definieren, und zwei kleinen Seiten (42), die eine kleine Abmessung (PD), kleiner als die große Abmessung (GD) definieren, besitzt, sodass die großen Seiten (41) des Eingangswellenleiters (4, 4') parallel zur Strömungsachse (20) verlaufen, während die kleinen Seiten (42) des mindestens einen Eingangswellenleiters (4, 4') orthogonal zur Strömungsachse (20) verlaufen;
wobei das Gehäuse (3) aufweist:
- einen Außendurchmesser (DE), wobei der Außendurchmesser (DE) größer ist als die kleine Abmessung (PD) des mindestens einen Eingangswellenleiters (4, 4'), der quer am Gehäuse (3) fixiert ist,
- einen Innendurchmesser (DI) kleiner als den Außendurchmesser (DE), und
- eine Gehäuselänge (LE), die entlang der Strömungsachse (20) zwischen einem ersten Ende (31) und einem gegenüberliegenden zweiten Ende (32) gemessen wird, wobei die Gehäuselänge (LE) streng größer ist als die große Abmessung (GD) des Eingangswellenleiters (4, 4');
wobei an dem Gehäuse (3) mindestens ein von dem mindestens einen Eingangswellenleiter (4, 4') umgebenes Eingangsfenster (37) für eine Ausbreitung von Mikrowellen durch das mindestens eine Eingangsfenster (37) hindurch im Inneren des Gehäuses (3) vorgesehen ist,
und wobei der Mikrowellenreaktor (1) im Inneren des Gehäuses (3) mindestens ein makroporöses Keramikelement (7) umfasst, das mindestens gegenüber dem mindestens einen Eingangsfenster (37) positioniert ist, der einen Elementdurchmesser (D7) aufweist, der zwischen dem 0,25- und 0,8-fachen des Innendurchmessers (DI) des Gehäuses (3) liegt, und der die Gasströmung durch das mindestens eine makroporöse Keramikelement (7) hindurch im Inneren des Gehäuses (3) einschließt;
**dadurch gekennzeichnet, dass**
- der mindestens eine Eingangswellenleiter (4, 4') einen ersten Eingangswellenleiter (4) und einen zweiten Eingangswellenleiter (4') umfasst, die entlang einer Richtung parallel zur Strömungsachse (20) zueinander versetzt sind,
- das mindestens eine Eingangsfenster (37) ein erstes Eingangsfenster (37) und ein zweites Eingangsfenster (37') umfasst, die ebenfalls entlang einer Richtung parallel zur Strömungsachse (20) zueinander versetzt sind, wobei das erste Eingangsfenster (37) vom ersten Eingangswellenleiter (4) umgeben ist und das zweite Eingangsfenster (37') vom zweiten Eingangswellenleiter (4') umgeben ist;
und wobei das mindestens eine makroporöse Keramikelement (7) mindestens gegenüber dem ersten Eingangsfenster (37) und dem zweiten Eingangsfenster (37') positioniert ist; und dadurch, dass
der erste Eingangswellenleiter (4) und der zweite Eingangswellenleiter (4') mit einem gleichen stromaufwärts gelegenen Wellenleiter (8') verbunden sind, der zur Einführung von Mikrowellen ins Innere eines jeden des ersten Eingangswellenleiters (4) und zweiten Eingangswellenleiters (4') vorgesehen ist, wobei der stromaufwärts gelegene Wellenleiter (8') mindestens einen geraden Abschnitt aufweist, der einen rechteckigen Abschnitt mit zwei großen Seiten (81'), die eine große Abmessung (GD) definieren, und zwei kleinen Seiten (82'), die eine kleine Abmessung (PD) kleiner als die große Abmessung (GD) definieren, aufweist, wobei die großen Seiten (81') des stromaufwärts gelegenen Wellenleiters (8') parallel zur Strömungsachse (20) sind, während die kleinen Seiten (82') des stromaufwärts gelegenen Wellenleiters (8') orthogonal zur Strömungsachse (20) liegen.

2. Mikrowellenreaktor (1,1') nach Anspruch 1, umfassend mindestens einen Ausgangswellenleiter (5), der quer am Gehäuse (3) diametral gegenüber dem mindestens einen Eingangswellenleiter (4, 4') fixiert ist, wobei:
- der mindestens eine Ausgangswellenleiter (5) sich entlang der Ausbreitungsachse (40) erstreckt und einen rechteckigen Querschnitt mit zwei großen Seiten (51), die eine große Abmessung (GD) definieren, und zwei kleinen Seiten (52) aufweist, die eine kleine Abmessung (PD), kleiner ist als die große Abmessung (GD) definieren, wobei die großen Seiten (51) des mindestens einen Ausgangswellenleiters (5) parallel zur Strömungsachse (20) liegen, während die kleinen Seiten (52) des mindestens einen Ausgangswellenleiters (5) orthogonal zur Strömungsachse (20) liegen, wobei die große Abmessung (GD) des mindestens einen Ausgangswellenleiters (5) der großen Abmessung (GD) des Eingangswellenleiters (4, 4') entspricht und die kleine Abmessung (PD) des mindestens einen Ausgangswellenleiters (5) der kleinen Abmessung (PD) des Eingangswellenleiters (4, 4') entspricht;
- das Gehäuse (3) mindestens ein Ausgangsfenster (38) diametral gegenüber dem mindestens einen Eingangsfenster (37) aufweist, und das von dem mindestens einen Ausgangswellenleiter (5) für eine Ausbreitung von Mikrowellen durch das Ausgangsfenster (38) hindurch umgeben ist.

3. Mikrowellenreaktor (1') nach Anspruch 1 oder 2, wobei sich das mindestens eine makroporöse Keramikelement (7) mindestens vom ersten Eingangsfenster (37) bis zum zweiten Eingangsfenster (37') erstreckt.

4. Mikrowellenreaktor (1') nach einem der vorstehenden Ansprüche, wobei das mindestens eine makroporöse Keramikelement (7) ein erstes makroporöses Keramikelement umfasst, das mindestens gegenüber dem ersten Eingangsfenster (37) positioniert ist, und ein zweites makroporöses Keramikelement, das sich vom ersten makroporösen Keramikelement unterscheidet und mindestens gegenüber dem zweiten Eingangsfenster (37') positioniert ist.

5. Mikrowellenreaktor (1, 1') nach einem der vorstehenden Ansprüche, wobei das mindestens eine makroporöse Keramikelement (7) einteilig ist oder aus einem Stapel von mindestens zwei makroporösen Keramikblöcken in Strömungsachsenrichtung (20) gebildet ist.

6. Mikrowelleninstallation zum Abbauen von giftigen oder schadstoffhaltigen Gasen, die in einem strömenden Gas enthalten sind, durch thermische Oxidation, wobei die Mikrowelleninstallation mindestens umfasst:
- einen Mikrowellenreaktor (1,1') nach einem der Ansprüche 1 bis 5,
- mindestens einen Mikrowellengenerator, der an den mindestens einen Eingangswellenleiter (4, 4') des Mikrowellenreaktors (1,1') angeschlossen ist.

7. Mikrowelleninstallation nach Anspruch 6, umfassend eine Steuereinheit, die an den mindestens einen Mikrowellengenerator angeschlossen ist, und konfiguriert ist, um eine Mikrowellenleistung am Ausgang des mindestens einen Mikrowellengenerators zu steuern und um somit eine Temperatur des mindestens einen makroporösen Keramikelements (7) in einem thermischen Oxidationstemperaturbereich zu regeln.

8. Mikrowelleninstallation nach Anspruch 7, umfassend eine Temperaturmessvorrichtung, die angepasst ist, um die Temperatur des mindestens einen makroporösen Keramikelements (7) zu messen, wobei die Steuereinheit mindestens mit der Temperaturmessvorrichtung in Verbindung steht und konfiguriert ist, um die Mikrowellenleistung in Abhängigkeit von der Messung der Temperatur des mindestens einen makroporösen Keramikelements (7) zu steuern.

9. Mikrowelleninstallation nach einem der Ansprüche 6 bis 8, umfassend:
- ein Injektionssystem für eine Injektion des Gases mit einem gegebenen Injektionsdurchsatz im Inneren des Gehäuses (3) des Mikrowellenreaktors (1, 1'), wobei das Injektionssystem eine Injektionsleitung (61) umfasst, die an das erste Ende (31) des Gehäuses (3) angeschlossen ist, um das Gas im Bereich des ersten Endes (31) zu injizieren;
- ein Abgassystem zum Abführen des Gases aus dem Gehäuse (3) des Mikrowellenreaktors (1, 1') heraus, wobei das Abgassystem eine Abgasleitung (62) umfasst, die an das zweite Ende (32) des Gehäuses (3) angeschlossen ist, um das Gas im Bereich des zweiten Endes (32) nach Behandeln durch das mindestens eine makroporöse Keramikelement (7) hindurch abzuführen.

10. Mikrowelleninstallation nach den Ansprüchen 7 und 9, umfassend einen Durchflussmesser zum Messen des Injektionsdurchsatzes des Gases, und wobei die Steuereinheit mindestens mit dem Durchflussmesser in Verbindung steht und konfiguriert ist, um die Mikrowellenleistung in Abhängigkeit vom Injektionsdurchsatz des Gases zu steuern.

11. Mikrowellenbehandlungsverfahren zum Abbauen von giftigen oder schadstoffhaltigen Gasen, die in einem strömenden Gas enthalten sind, durch thermische Oxidation, wobei das Mikrowellenbehandlungsverfahren durch eine Mikrowelleninstallation nach einem der Ansprüche 6 bis 10 durchgeführt wird und mindestens die folgenden Schritte umfasst:
- einen Vorheizschritt, bei dem der mindestens eine Mikrowellengenerator Mikrowellen erzeugt, bis das mindestens eine makroporöse Keramikelement (7) eine Heiztemperatur erreicht, die in einem Temperaturbereich für thermische Oxidation umfasst ist;
- einen Injektionsschritt, der nach dem Vorheizschritt abläuft, bei dem das Gas kontinuierlich mit einem gegebenen Injektionsdurchsatz in das Gehäuse (3) injiziert wird.

12. Mikrowellenbehandlungsverfahren nach Anspruch 11, umfassend einen Leistungssteuerungsschritt, bei dem eine Mikrowellenleistung am Ausgang des mindestens einen Mikrowellengenerators gesteuert wird, um eine Temperatur des mindestens einen makroporösen Keramikelements (7) im Temperaturbereich für thermische Oxidation zu regeln.

13. Mikrowellenbehandlungsverfahren nach Anspruch 12, wobei der Leistungssteuerungsschritt die Steuerung der Mikrowellenleistung in Abhängigkeit vom Injektionsdurchsatz des Gases umsetzt.

## Claims

1. A microwave reactor (1, 1') for abatement by thermal oxidation of toxic or polluting gases contained in a flowing gas, said microwave reactor (1, 1') comprising:
- a chamber (3) made of a microwave-reflective material and extending longitudinally along a flow axis (20) for the flow of gas inside said chamber (3);
- at least one inlet waveguide (4, 4') coupled to the chamber (3) and extending along a propagation axis (40) orthogonal to the flow axis (20) for microwave propagation along said propagation axis (40), said at least one inlet waveguide (4, 4') having a rectangular cross-section with two long sides (41) defining a larger dimension (GD) and two short sides (42) defining a smaller dimension (PD) less than the larger dimension (GD), such that the long sides (41) of the inlet waveguide (4, 4') are parallel to the flow axis (20), while the short sides (42) of the at least one inlet waveguide (4, 4') are orthogonal to the flow axis (20);
wherein the chamber (3) has:
- an external diameter (DE), said external diameter (DE) being greater than the smaller dimension (PD) of the at least one inlet waveguide (4, 4') which is fastened transversely to the chamber (3),
- an internal diameter (Dl) less than the external diameter (DE), and
- an enclosure length (LE) measured along the flow axis (20) between a first end (31) and a second opposite end (32), said enclosure length (LE) being strictly greater than the larger dimension (GD) of the inlet waveguide (4, 4');
wherein the chamber (3) is provided with at least one inlet window (37) surrounded by the at least one inlet waveguide (4, 4') for microwave propagation through the at least one inlet window (37) inside the chamber (3),
and wherein said microwave reactor (1) comprises, inside the chamber (3), at least one macroporous ceramic element (7) positioned at least in front of the at least one inlet window (37), which has an element diameter (D7) comprised between 0.25 and 0.8 times the internal diameter (D1) of the chamber (3), and which confines the gas flow through the at least one macroporous ceramic element (7) inside the chamber (3);
**characterized in that**
- the at least one inlet waveguide (4, 4') comprises a first inlet waveguide (4) and a second inlet waveguide (4') which are offset from each other in a direction parallel to the flow axis (20),
- the at least one inlet window (37) comprises a first inlet window (37) and a second inlet window (37') which are also offset from each other in a direction parallel to the flow axis (20), the first inlet window (37) being surrounded by the first inlet waveguide (4) and the second inlet window (37') being surrounded by the second inlet waveguide (4');
and wherein the at least one macroporous ceramic element (7) is positioned at least in front of the first inlet window (37) and of the second inlet window (37'); and
**in that** the first inlet waveguide (4) and the second inlet waveguide (4') are connected to the same upstream waveguide (8') provided for the introduction of microwaves inside each of said first inlet waveguide (4) and of said second inlet waveguide (4'), said upstream waveguide (8') having at least one straight portion having a rectangular cross-section with two long sides (81') defining a larger dimension (GD) and two short sides (82') defining a smaller dimension (PD) less than the larger dimension (GD), the long sides (81') of said upstream waveguide (8') being parallel to the flow axis (20), while the short sides (82') of said upstream waveguide (8') are orthogonal to the flow axis (20).

2. The microwave reactor (1, 1') according to claim 1, comprising at least one outlet waveguide (5) fastened transversely to the chamber (3) diametrically opposite the at least one inlet waveguide (4, 4'), wherein:
- said at least one outlet waveguide (5) extends along the propagation axis (40) and has a rectangular cross-section with two long sides (51) defining a larger dimension (GD) and two short sides (52) defining a smaller dimension (PD) less than the larger dimension (GD), the long sides (51) of the at least one outlet waveguide (5) being parallel to the flow axis (20), while the short sides (52) of the at least one outlet waveguide (5) are orthogonal to the flow axis (20), the larger dimension (GD) of the at least one outlet waveguide (5) being equivalent to the larger dimension (GD) of the at least one inlet waveguide (4, 4') and the smaller dimension (PD) of the at least one outlet waveguide (5) being equivalent to the smaller dimension (PD) of the at least one inlet waveguide (4, 4');
- said chamber (3) has at least one outlet window (38) diametrically opposite the at least one inlet window (37) and surrounded by the at least one outlet waveguide (S) for microwave propagation through the at least one outlet window (38).

3. The microwave reactor (1') according to claim 1 or 2, wherein the at least one macroporous ceramic element (7) extends at least from the first inlet window (37) to the second inlet window (37').

4. The microwave reactor (1') according to any one of the preceding claims, wherein the at least one macroporous ceramic element (7) comprises a first macroporous ceramic element positioned at least in front of the first inlet window (37), and a second macroporous ceramic element distinct from the first macroporous ceramic element and positioned at least in front of the second inlet window (37').

5. The microwave reactor (1, 1') according to any one of the preceding claims, wherein the at least one macroporous ceramic element (7) is a single piece or is formed from a stack of at least two macroporous ceramic blocks in the direction of the flow axis (20).

6. A microwave installation for abatement by thermal oxidation of toxic or polluting gases contained in a flowing gas, said microwave installation comprising at least:
- a microwave reactor (1, 1') according to any one of claims 1 to 5,
- at least one microwave generator, connected to the at least one input waveguide (4, 4') of the microwave reactor (1, 1').

7. The microwave installation according to claim 6, comprising a control unit connected to the at least one microwave generator and configured to control the microwave power at the output of the at least one microwave generator and thus to regulate the temperature of the at least one macroporous ceramic element (7) within a thermal oxidation temperature range.

8. The microwave installation according to claim 7, comprising a temperature measurement device configured to measure the temperature of the at least one macroporous ceramic element (7), the control unit being at least in communication with said temperature measurement device and configured to control the microwave power as a function of the temperature measurement of the at least one macroporous ceramic element (7).

9. The microwave installation according to any one of claims 6 to 8, comprising:
- an injection system for injecting the gas with a given injection flow rate inside the chamber (3) of the microwave reactor (1, 1'), said injection system comprising an injection duct (61) connected to the first end (31) of the chamber (3) for injecting the gas at said first end (31);
- an exhaust system for exhausting the gas from the chamber (3) of the microwave reactor (1, 1'), said exhaust system comprising an exhaust duct (62) connected to the second end (32) of the chamber (3) for discharging the gas at said second end (32) after treatment through the at least one macroporous ceramic element (7).

10. The microwave installation according to claims 7 and 9, comprising a flow meter for measuring the gas injection flow rate, and wherein the control unit is at least in communication with the flow meter and is configured to control the microwave power as a function of the gas injection flow rate.

11. A microwave treatment method for abatement by thermal oxidation of toxic or polluting gases contained in a flowing gas, said microwave treatment method being implemented by a microwave installation according to any one of claims 6 to 10 and comprising at least the following steps:
- a preliminary heating step during which the at least one microwave generator generates microwaves until the at least one macroporous ceramic element (7) reaches a heating temperature within a thermal oxidation temperature range;
- an injection step, occurring after the preliminary heating step, during which the gas is continuously injected into the chamber (3) at a given injection flow rate.

12. The microwave treatment method according to claim 11, comprising a power control step in which the microwave power at the output of the at least one microwave generator is controlled to regulate the temperature of the at least one macroporous ceramic element (7) within the thermal oxidation temperature range.

13. The microwave treatment method according to claim 12, wherein the power control step implements microwave power control as a function of the gas injection flow rate.
